# FASCICULE DE BREVET EUROPEEN

(11) **EP 0 706 330 B1**
(45) Date de publication et mention de la délivrance du brevet: **02.05.1997**
(21) Numéro de dépôt: 94920521.5
(22) Date de dépôt: 28.06.1994
(51) Int. Cl.: A23L 3/14, A23L 3/00

(54) **STRUCTURE DE TAMBOUR ROTATIF POUR UN STERILISATEUR**
TROMMELSTRUKTUR FÜR EINEN STERILISATOR
ROTARY DRUM STRUCTURE FOR A STERILIZING APPARATUS

(30) Priorité: 29.06.1993 FR 9307891
(43) Date de publication de la demande: 17.04.1996
(73) Titulaire: BARRIQUAND STERIFLOW, F-42300 Roanne (FR)
(72) Inventeur: ROUMAGNAC, Jean-Patrick, F-42120 Le Coteau (FR)
(74) Mandataire: Dronne, Guy
(86) Numéro de dépôt international: FR9400778
(87) Numéro de publication internationale: WO9501107

(56) Documents cités:
- EP-A- 0 292 041
- WO-A-92/07478
- FR-A- 2 680 688
- US-A- 3 532 049

## Description

La présente invention a pour objet une structure de tambour rotatif pour un stérilisateur du type à tambour tournant.

La stérilisation d'objets ou de produits de l'industrie alimentaire ou pharmaceutique, tels que des boîtes, des bocaux ou des barquettes, des flacons, etc., est souvent réalisée dans des autoclaves ou stérilisateurs dit discontinus, à l'intérieur desquels on introduit les produits à traiter puis on les en extrait après l'achèvement du cycle de traitement prévu. Ces produits à traiter sont disposés dans des paniers, des plateaux empilables ou autres éléments de stockage similaires.

Pour certains de ces produits, le traitement thermique de stérilisation doit être effectué avec une agitation du produit à l'intérieur de son emballage. Cette agitation est produite par la rotation à l'intérieur du stérilisateur d'un tambour enfermant les paniers remplis des emballages avec les produits à stériliser qu'ils contiennent. Le même type de problème se pose lorsque l'on veut égoutter ou basculer certains produits dans un appareil du genre autoclave qui est alors appelé égoutteur ou basculeur. Cette dernière opération permet l'élimination de l'eau déposée sur les produits par gravité lors de la stérilisation.

La demande de brevet WO-A-93/04707 décrit un stérilisateur ou autoclave à tambour tournant et notamment les moyens de maintien des paniers à l'intérieur du tambour tournant.

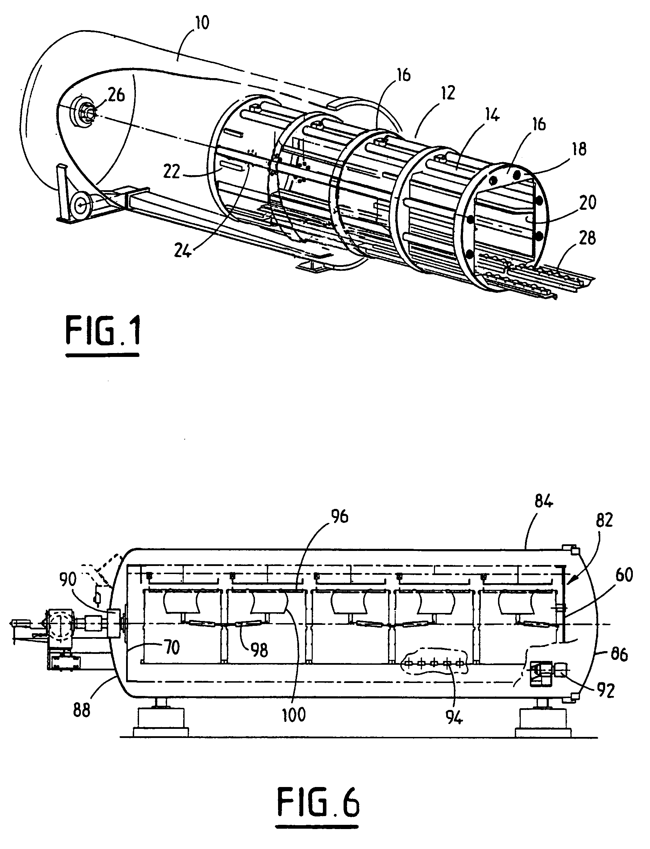

Sur la figure 1 annexée, on a représenté en perspective le mode connu de réalisation du tambour tournant. Sur cette figure, on a représenté une partie de l'enveloppe cylindrique externe 10 du stérilisateur et, en partie sorti, l'ensemble du tambour rotatif 12. Le tambour 12 est constitué par des longerons 14 parallèles les uns aux autres constitués par des tubes qui définissent la périphérie de la structure du tambour. Les tubes 14 traversent des secteurs circulaires tels que 16. Les longerons 14 sont soudés sur les secteurs circulaires 16 réalisés en tole. Aux extrémités de cette structure, on trouve, d'une part, une pièce 18 munie d'une ouverture 20 pour l'introduction des paniers et, d'autre part, une pièce 22 munie de moyens 24 de coopération avec les moyens d'entraînement en rotation 26 montés sur l'enceinte 10. En outre, sur cette figure, on a représenté en partie sortis des rails 28 reposant sur la partie inférieure de la structure pour permettre l'introduction et la sortie des paniers dans lesquels sont placés les produits à traiter.

Cette structure présente de nombreux inconvénients. D'une part, sa durée de vie est relativement courte en raison des sollicitations à la fatigue de plus en plus grande, du fait du taux élevé d'utilisation des installations de traitement et des charges embarquées également de plus en plus grandes. D'autre part, ce type de construction ne permet pas d'atteindre un niveau de solidité important, d'où des phénomènes de flexion, de torsion et/ou de cisaillement entre les différents éléments constitutifs du tambour.

Ces déformations ont une incidence non négligeable sur l'efficacité des dispositifs de maintien des objets qui sont solidaires de cette structure. Elle entraîne des coûts élevés d'entretien en raison des arrêts fréquents de la machine. Enfin, de telles structures présentent un poids élevé qui entraîne une consommation d'énergie électrique importante pour provoquer la rotation du tambour.

Un objet de la présente invention est de fournir une structure de tambour rotatif pour stérilisateur ou autoclave à tambour tournant qui présente une structure plus légère et surtout une rigidité accrue et donc une durée de vie plus importante.

Pour atteindre ce but, la structure de tambour rotatif pour un stérilisateur comportant une enveloppe externe présentant un axe longitudinal autour duquel ledit tambour est monté rotatif se caractérise en ce qu'elle comprend :
quatre éléments formant poutre disposés parallèlement audit axe et définissant un volume parallélépipédique rectangle ;
une pluralité d'éléments d'entretoise disposés dans les quatre faces limitant ledit volume parallélépipédique, chaque élément d'entretoise présentant une première extrémité soudée sur un élément de poutre et une deuxième extrémité soudée sur un autre élément de poutre appartenant à la même face, par quoi on réalise une structure triangulée entre lesdits éléments de poutre ;
une première pièce d'extrémité fixée à une première extrémité des éléments de poutre pour définir un pallier de pivotement disposé selon ledit axe de pivotement ;
une deuxième pièce d'extrémité fixée à une deuxième extrémité des éléments de poutre pour définir une ouverture d'entrée dans ledit tambour ; et
des moyens formant un chemin de roulement circulaire solidaire desdits éléments de poutre, ledit chemin de roulement présentant comme axe de révolution ledit axe de pivotement, ledit chemin de roulement étant apte à coopérer avec des moyens de guidage en rotation solidaires de la face interne de l'enveloppe externe dudit stérilisateur.

On comprend que par cette structure mécanique mécano-soudée constituée par les quatre poutres longitudinales reliées entre elles par une structure mécano-soudée constituée par les entretoises qui, de préférence, forment une structure dite triangulée, on obtient d'une part une très grande rigidité de l'ensemble de la structure et une grande résistance en flexion, en torsion et en cisaillement, tout en obtenant une structure de poids réduit compte tenu de ces qualités mécaniques.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1, déjà décrite, est une vue en perspective d'un tambour rotatif de stérilisateur selon l'art antérieur ;
- la figure 2 est une vue en perspective de la structure de tambour selon l'invention ;
- la figure 3 est une demi-vue en élévation de la pièce avant définissant l'ouverture du tambour ;
- la figure 4 est une vue en élévation d'un quart de la pièce arrière servant à définir l'axe de rotation du tambour ;
- la figure 5 est une vue en coupe de comté de la pièce arrière ; et
- la figure 6 est une vue en coupe axiale d'un stérilisateur ou autoclave comportant le tambour rotatif selon l'invention.

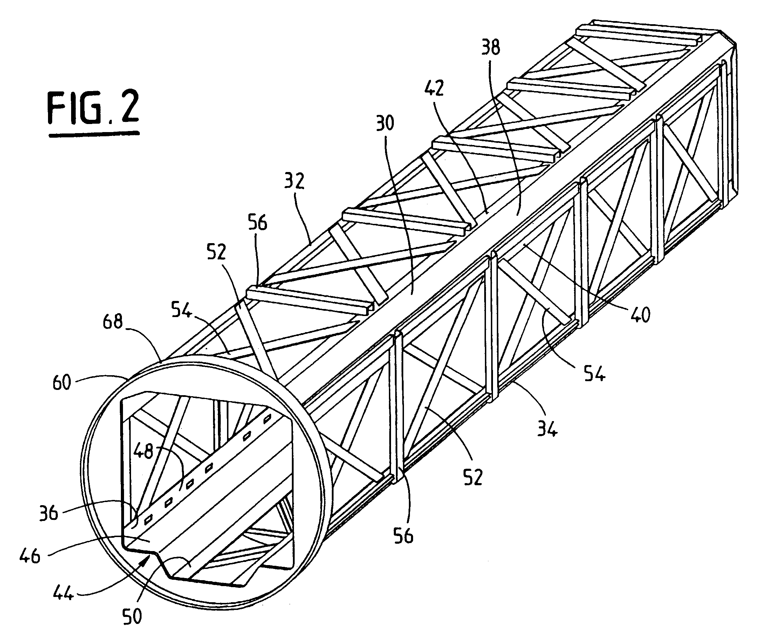

En se référant tout d'abord à la figure 2, on va décrire la structure de tambour selon l'invention. Celle-ci est essentiellement constituée par quatre poutres longitudinales 30, 32, 34, 36 qui sont disposées parallèlement à l'axe de rotation du tambour. Ces quatre poutres définissent un parallélépipède rectangle dont la section droite est carrée ou rectangulaire. Chaque poutre supérieure, c'est-à-dire les poutres 30 et 32, comporte une âme 38 et deux ailes de fixation 40 et 42. Les poutres inférieures 34 et 36 ont en section droite une forme plus complexe puisque leur âme 44 définit en plus une portion horizontale 46 dont la fonction sera explicitée ultérieurement. Les poutres inférieures comportent également deux ailes 48 et 50 de fixation.

Comme le montre également la figure 2, les poutres limitant une même face du parallélépipède rectangle sont reliées entre elles par des éléments formant entretoise ou plus précisément une structure triangulée. De préférence, ces entretoises sont constituées par une alternance de croisillons tels que 52 et 54 formés par exemple par des fers plats et de traverses 56 constituées par exemple par des profilés en U. Les extrémités de chaque entretoise 52, 54, 56 sont soudées sur les ailes 42 pour les poutres supérieures ou 50 et 48 pour les poutres inférieures. On obtient ainsi une structure présentant une très grande rigidité et un poids relativement réduit compte tenu de sa rigidité. On comprend également qu'il est aisé de prévoir des poutres de longueur différente pour adapter la longueur du tambour aux dimensions de l'autoclave sans que cela modifie la structure générale du tambour.

Il va également de soi que les entretoises solidarisant entre elles les poutres longitudinales pourraient avoir une autre forme que celle qui est représentée sur la figure 2. Le forme et la disposition triangulée de ces ensembles d'entretoises doivent être calculées en fonction des conditions d'utilisation du stérilisateur pour assurer la rigidité souhaitée.

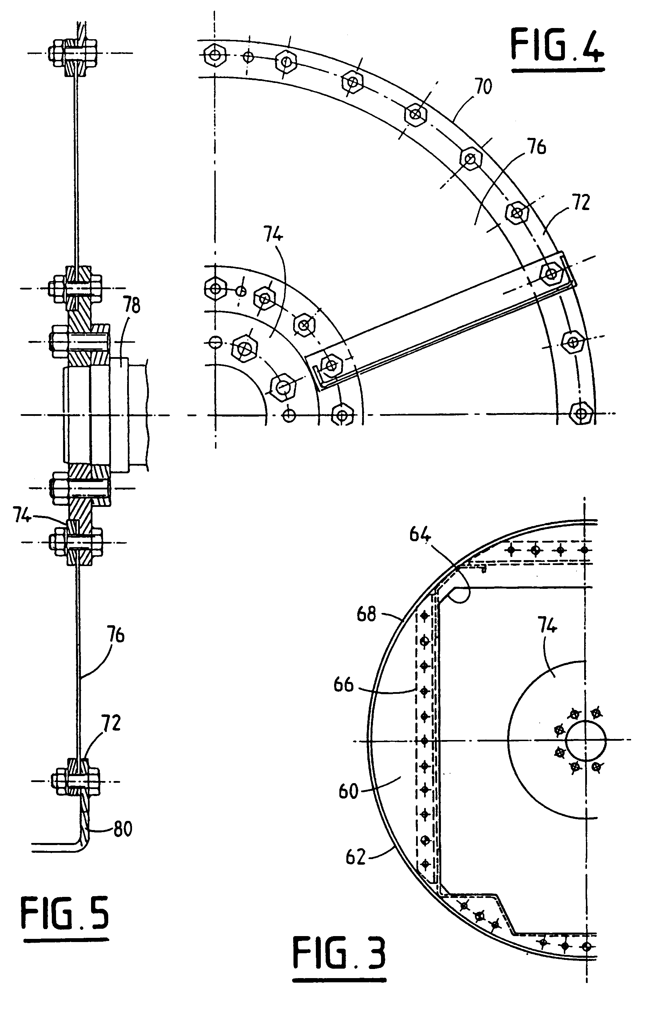

Comme on le voit également sur la figure 2, la structure qui vient d'être décrite comporte en outre une pièce avant 60 qui est plus visible sur la figure 3. La pièce avant 60 présente une périphérie circulaire 62 et une découpe interne 64 constituant de préférence l'ouverture du tambour. Le forme de la découpe interne 64 correspond bien sûr au profil respectivement des poutres supérieures 30 et 32 et à celui des poutres inférieures 34 et 36. De préférence, la tôle formant la pièce avant 60 est fixée sur la structure constituée par les poutres et les différentes entretoises par l'intermédiaire de cornières telles que 66. L'assemblage de ces différentes pièces est de préférence réalisée par boulonnage. Selon un mode préféré de mise en oeuvre, la pièce avant 60 est munie sur sa périphérie d'une virole cylindrique 68 qui présente, comme axe de révolution, l'axe de rotation du tambour. Cette virole cylindrique 68 constitue un chemin de roulement pour le guidage du tambour en rotation à l'intérieur de l'enceinte externe du stérilisateur comme on l'expliquera ultérieurement.

A son autre extrémité, la structure de tambour est munie d'une pièce arrière portant la référence 70 et qui est représentée plus en détails sur les figures 4 et 5. Cette pièce arrière sert à relier un moyeu d'entraînement en rotation du tambour au reste de la structure de tambour. Cette pièce 70 comporte une couronne circulaire externe 72 qui est reliée à une partie interne 74 formant moyeu par une peau ou voile 76 s'étendant entre la périphérie du moyeu et la couronne externe 72.

Comme le montre schématiquement la figure 5, un arbre d'entraînement en rotation 78 traversant le fond de l'enceinte du stérilisateur est engagé dans le moyeu 74. Comme le montre également la figure 5, la couronne externe 72 est solidaire d'une tole 80, elle-même solidaire de l'extrémité de la structure de tambour.

De préférence, la pièce arrière 70 est boulonnée sur la structure triangulée du tambour.

Sur la figure 6, on a représenté l'ensemble d'un stérilisateur comportant le tambour décrit en relation avec les figures 2 à 5, ce tambour portant la référence générale 82. Sur cette figure, on a également représenté l'enveloppe externe cylindrique 84 du stérilisateur, sa porte avant étanche 86 et son fond 88. Dans le fond 88, on a représenté de façon simplifiée le passage de l'arbre d'entraînement en rotation 90 qui coopère avec la pièce arrière 70 du tambour. On a également représenté sur cette figure des galets de guidage en rotation tels que 92 montés à l'intérieur de l'enceinte externe 84 et qui coopère avec le chemin de roulement 68 de la pièce avant 60 du tambour. On a également représenté sur cette figure de façon schématique des rails de guidage des plateauxintroduits dans le tambour référencés 94 qui sont montés sur les parties horizontales 46 des âmes des poutres inférieures 34 et 36. Enfin, sur cette figure, on a représenté des plateaux presseurs 96 qui servent à immobiliser et à maintenir en rotation les paniers lorsqu'ils ont été introduits dans le tambour. Ces plateaux presseurs sont commandés par des systèmes de vérin 98 et de leviers 100 qui sont décrits en détails dans la demande de brevet PCT déjà mentionnée.

Il suffit de noter que, compte tenu du mode de réalisation de la face supérieure du tambour qui est en fait plane, le montage des plateaux presseurs est facilité par rapport aux tambours de l'art antérieur dont la forme générale est cylindrique. En outre, la grande rigidité de la structure assure unemeilleure efficacité des plateaux presseurs et une meilleure uniformisation de l'effort de pressage.

Il va de soi que l'on ne sortirait pas de l'invention si l'on donnait aux poutres longitudinales du tambour un profil en section droite différent de celui qui est représenté sur la figure 2. Il va également de soi que la structure triangulée constituée par les éléments d'entretoise pourrait présenter une autre configuration adaptée aux contraintes mécaniques particulières du tambour.

Il va également de soi que le chemin de roulement 68 pourrait ne pas être fixé sur la périphérie de la pièce d'extrémité 60 mais être solidaire des poutres 30 à 36 dans leur partie courante. L'extrémité d'ouverture du tambour étant alors en porte-à-faux.

Il va encore de soi que l'on pourrait prévoir plusieurs chemins de roulement 68 décalés sur la longueur du tambour pour assurer encore un meilleur guidage en rotation et éviter tout risque de flexion dans le cas où la charge à traiter serait importante.

## Revendications

1. Structure de tambour rotatif pour un stérilisateur comportant une enveloppe externe présentant un axe longitudinal autour duquel ledit tambour est monté rotatif, caractérisée en ce qu'elle comprend :
quatre éléments formant poutre (30, 32, 34, 36) disposés parallèlement audit axe et définissant un volume parallélépipédique rectangle destiné à recevoir les objets à stériliser ;
une pluralité d'éléments d'entretoise (52, 54, 56) disposés dans les quatre faces limitant ledit volume parallélépipédique, chaque élément d'entretoise présentant une première extrémité soudée sur un élément de poutre et une deuxième extrémité soudée sur un autre élément de poutre appartenant à la même face et formant des structures triangulées ;
une première pièce d'extrémité (70) fixée à une première extrémité des éléments de poutre pour définir un pallier de pivotement (74) disposé selon ledit axe de pivotement ;
une deuxième pièce d'extrémité (60) fixée à une deuxième extrémité des éléments de poutre pour définir une ouverture d'entrée (64) dans ledit tambour ; et
des moyens (62) formant un chemin de roulement circulaire solidaire desdits éléments de poutre, ledit chemin de roulement présentant comme axe de révolution ledit axe de pivotement, ledit chemin de roulement étant apte à coopérer avec des moyens de guidage en rotation (92) solidaires de la face interne de l'enveloppe externe dudit stérilisateur.

2. Structure de tambour selon la revendication 1, caractérisée en ce que les deux éléments formant poutre (34, 36) définissent la face inférieure dudit volume présentent chacune une âme (44) qui définit une structure horizontale interne (46) de roulement.

3. Structure de tambour selon l'une quelconque des revendications 1 et 2, caractérisée en ce que lesdits éléments d'entretoise (52, 54, 56) associés à deux éléments de poutre (30, 32, 34, 36) formant alternativement des croisillons (52, 54) et des traverses (56).

4. Structure de tambour selon l'une quelconque des revendications 1 à 3, caractérisée en ce que ladite deuxième pièce d'extrémité (60) est constituée par une plaque qui présente une périphérie circulaire (62) et en ce que ledit chemin de roulement comprend une virole cylindrique (68) solidaire de la périphérie de ladite plaque.

5. Structure de tambour selon l'une quelconque des revendications 1 à 4, caractérisée en ce que ladite première pièce d'extrémité (70) comprend un voile (76) dont la périphérie externe est solidaire de ladite première extrémité des éléments formant poutre (30, 32, 34, 36) et dont la périphérie interne est solidaire de moyens formant moyeux (74).

## Claims

1. A rotary drum structure for a sterilizer including an outer case having a longitudinal axis about which said drum is mounted to rotate, the structure being characterized in that it comprises:
four beam-forming elements (30, 32, 34, 36) disposed parallel to said axis and defining a rectangular parallelepiped volume for receiving the objects to be sterilized;
a plurality of spacer elements (52, 54, 56) disposed in the four faces defining said parallelepiped volume, each spacer element having a first end welded to one beam element and a second end welded to another beam element lying in the same face, the spacer elements and the beams forming triangulated structures;
a first end part (70) fixed to a first end of the beam elements to define a rotary bearing (74) disposed along said pivot axis;
a second end part (60) fixed to a second end of the beam elements to define an inlet opening (64) into said drum; and
means (62) forming a circular running path secured to said beam elements, said running path having said pivot axis as its axis of revolution, said running path being adapted to co-operate with rotary guide means (92) secured to the inside face of the outer case of said sterilizer.

2. The drum structure according to claim 1, characterized in that each of the two beam-forming elements (34, 36) defining the bottom face of said volume has a respective web (44) defining an internal horizontal running structure (46).

3. The drum structure according to any one of claims 1 and 2, characterized in that said spacer elements (52, 54, 56) associated with two beam elements (30, 32, 34, 36) are constituted by alternating crossed diagonals (52, 54) and cross members (56).

4. The drum structure according to any one of claims 1 to 3, characterized in that said second end part (60) is constituted by a plate having a circular periphery (62) and in that said running path comprises a cylindrical flange (68) secured to the periphery of said plate.

5. The drum structure according to any one of claims 1 to 4, characterized in that said first end part (70) comprises a web (76) whose outer periphery is secured to said first ends of said beam-forming elements (30, 32, 34, 36), and whose inner periphery is secured to hub-forming means (74).

## Patentansprüche

1. Drehtrommelstruktur für einen mit einer äußeren Hülle, die eine Längsachse aufweist, um die herum drehbar die Trommel gelagert ist, versehenen Sterilisator, die durch die folgenden Teile gekennzeichnet ist:
vier trägerbildende Elemente (30, 32, 34, 36), die parallel zu der Achse angeordnet sind und einen parallelepipedförmigen rechtwinkeligen Raum zur Aufhahme der zu sterilisierenden Gegenstände definieren;
eine Vielzahl von in den vier den parallelepipedförmigen Raum begrenzenden Seitenflächen angeordneten Verstrebungselementen (52, 54, 56), wobei jedes Verstrebungselement ein erstes, auf ein Trägerelement aufgeschweißtes Ende und ein zweites, auf ein anderes, der selben Seitenfläche zugehöriges Trägerelement aufgeschweißtes Ende aufweist und aus Dreiecken zusammengesetzte Strukturen bildet;
ein erstes Endstück (70), das an einem ersten Ende der Trägerelemente befestigt ist, um ein entsprechend der Drehachse angeordnetes Drehlager (74) zu definieren;
ein zweites Endstück (60), das an einem zweiten Ende der Trägerelemente befestigt ist, um eine Eintrittsöffnung (64) in die Trommel zu definieren; und
Mittel (62), die einen kreisförmigen Laufbahnkreis bilden, der mit den Trägerelementen fest verbunden ist, wobei der Laufbahnkreis als Rotationsachse die Drehachse aufweist und wobei der Laufbahnkreis mit Rotationsführungsmitteln (92) zusammenwirken kann, welche mit der Innenfläche des Außenmantels des Sterilisators fest verbunden sind.

2. Trommelstruktur nach Anspruch 1, dadurch gekennzeichnet, daß jedes der zwei die Unterseite des Raumes bildenden trägerbildenden Elemente (34, 36) einen Steg (44) aufweist, der ein horizontales inneres Wälzgefüge (46) definiert.

3. Trommelstruktur nach einem der Ansprüche 1 oder 2, dadurch gekennzeichnet, daß die zwei Trägerelementen (30, 32, 34, 36) zugeordneten Verstrebungselemente (52, 54, 56) wechselweise Kreuzstreben (52, 54) und Querleisten (56) bilden.

4. Trommelstruktur nach einem der Ansprüche 1 bis 3, dadurch gekennzeichnet, daß das zweite Endstück (60) von einer Platte gebildet ist, die einen kreisförmigen Umfang (62) aufweist, und daß der Laufbahnkreis einen mit dem Umfang der Platte fest verbundenen zylindrischen Ring (68) umfaßt.

5. Trommelstruktur nach einem der Ansprüche 1 bis 4, dadurch gekennzeichnet, daß das erste Endstück (70) eine Abdeckung (76) umfaßt, deren äußerer Umfang mit dem ersten Ende der trägerbildenden Elemente (30, 32, 34, 36) fest verbunden ist und deren innerer Umfang mit den Naben (74) bildenden Mitteln fest verbunden ist.
